# EUROPÄISCHE PATENTSCHRIFT

(11) **EP 0 372 379 B1**
(45) Veröffentlichungstag und Bekanntmachung des Hinweises auf die Patenterteilung: **10.08.1994**
(21) Anmeldenummer: 89122056.8
(22) Anmeldetag: 29.11.1989
(51) Int. Cl.: C08G 77/60, C04B 35/58

(54) **Chlorhaltige Silazanpolymere, Verfahren zu ihrer Herstellung, Verfahren zur Herstellung von Siliziumnitrid enthaltenden keramischen Materialien**
Chlorinated silizane polymers, process for their preparation, process for the preparation of silicon nitride-containing ceramic materials
Polymères de silazanes contenant du chlore, leur procédé de préparation, procédé de préparation des matériaux céramiques

(30) Priorität: 03.12.1988 DE 3840777
(43) Veröffentlichungstag der Anmeldung: 13.06.1990
(73) Patentinhaber: HOECHST AKTIENGESELLSCHAFT, 65926 Frankfurt am Main (DE)
(72) Erfinder: Vaahs, Tilo, Dr., D-6233 Kelkheim(Taunus) (DE); Peuckert, Marcellus, Dr., D-6238 Hofheim am Taunus (DE); Brück, Martin, D-6238 Hofheim am Taunus (DE)

(56) Entgegenhaltungen:
- EP-A- 0 235 486
- EP-A- 0 266 918
- EP-A- 0 313 878
- DE-A- 3 733 727
- DE-A- 3 736 914
- FR-A- 2 611 208

## Beschreibung

Die Erfindung betrifft neue chlorhaltige Silazanpolymere, ihre Herstellung, ihre Weiterverarbeitung zu Siliziumnitrid enthaltendem keramischem Material, sowie dieses Material selbst.

Die Pyrolyse von Polysilazanen zu Siliziumnitrid enthaltendem keramischem Material wurde bereits in der Literatur (R.R. Wills et al., Ceramic Bulletin, Vol, 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669, EP-A-313878, EP-A-266918, EP-A-235486, DE-A-3 736 914).

Die vorliegende Erfindung stellt neue Ausgangsmaterialien für Polysilazane zur Verfügung, nämlich chlorhaltige Silazanpolymere.

Ein Gegenstand der vorliegenden Erfindung ist ein Verfahren zur Herstellung von chlorhaltigen Silazanpolymeren, dadurch gekennzeichnet, daß man Oligosilazane der Formel (I) 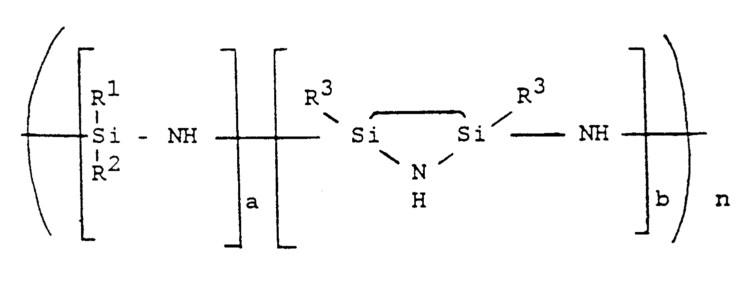
worin a und b Molfraktionen sind und n die Zahl sich wiederholender Einheiten im Molekül ist und a > 0, b > 0 und n = 2 bis 12 ist, mit mindestens einem der Chlorsilane
Cl₂R⁴Si-CH₂-CH₂-SiR⁴Cl₂, Cl₃Si-CH₂-CH₂-SiR⁵Cl₂,
R⁶SiCl₃ oder R⁷SiHCl₂ bei 30 °C bis 300 °C umsetzt, wobei unabhängig voneinander
R¹, R² = H, C₁-C₆-Alkyl oder C₂-C₆-Alkenyl,
R³, R⁴, R⁵, R⁶, R⁷ = C₁-C₆-Alkyl oder C₂-C₆-Alkenyl ist. Vorzugsweise wird a = 0,85-0,98 und b = 0,02-0,15 gewählt.
Die erfindungsgemäß hergestellten chlorhaltigen Silazanpolymeren werden im folgenden alternativ auch als polymere Chlorsilazane bezeichnet.
Die als Ausgangsprodukte eingesetzten Oligosilazane können dadurch erhalten werden, daß man ein Gemisch von Chlorsilanen der Formeln
R¹R²SiCl₂ und Cl₂R³Si-CH₂CH₂-SiR³Cl₂
wobei R¹ bis R³ die obige Bedeutung haben, in n-Pentan mit überschüssigem NH₃ bei -70 bis +100 °C umsetzt, analog dazu, wie dies in US-PS 4 482 669 für Methyldichlorsilan beschrieben ist (siehe dort insbesondere Spalten 4, 5, 7, 8). Dabei entsteht im allgemeinen ein Gemisch linearer und cyclischer Oligomerer mit verschiedenen Kettenlängen n. Cl₂R³Si-CH₂CH₂-SiR³Cl₂ ist durch Hydrosilylierung von R³HSiCl₂ und Ethin zugänglich.

Vorzugsweise ist R¹, R² = H, C₁-C₃-Alkyl oder C₂-C₃-Alkenyl, und R³, R⁴, R⁵, R⁶, R⁷ = C₁-C₃-Alkyl oder C₂-C₃-Alkenyl, wobei die genannten Reste gleich oder verschieden sein können. Besonders bevorzugt ist der Fall, daß R¹=H, R²=R³=R⁴=R⁵=R⁷=CH₃ und R⁶=CH₃ oder Vinyl ist.

Die Umsetzung von Oligosilazanen der Formel (I) mit b=0, (d.h. also von Oligosilazanen der Formel [R¹R²-Si-NH]ₙ mit n etwa 2 bis etwa 12) mit Chlorsilanen der Formel R⁷SiHCl₂, ist für den Fall, daß R⁷=C₁-C₆-Alkyl ist und keines der anderen Chlorsilane Cl₂R₄Si-CH₂CH₂-SiR⁴Cl₂, Cl₃Si-CH₂CH₂-SiR⁵Cl₂ und R⁶SiCl₃ gleichzeitig anwesend ist, bereits in der DE-A-3 733 727 (EP-A-373878) beschrieben worden.

Vorzugsweise beträgt bei der Umsetzung zum polymeren Chlorsilazan das molare Verhältnis der Reaktanten Chlorsilan:Monomereinheit des Oligosilazans (n= 1) 0,1:1 bis etwa 1,5:1, insbesondere etwa 0,1:1 bis etwa 0,7:1.

Zur Umsetzung der Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50°C gehalten. Anschließend erhitzt man auf Temperaturen von 100 bis 300°C, vorzugsweise auf 120 bis 250°C.

Das als Nebenprodukt gebildete NH₃ entweicht während der Reaktion teilweise. Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende NH₄Cl sublimiert im Verlauf der Reaktion zum größten Teil aus dem Reaktionsgemisch ab. Der eventuell verbliebene Rest des NH₄Cl kann durch Extraktion mit einem inerten organischen Lösungsmittel, wie n-Hexan, Toluol, Ether von dem erfindungsgemäß hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete NH₄Cl unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die hergestellten neuen polymeren Chlorsilazane haben die Formel (II) 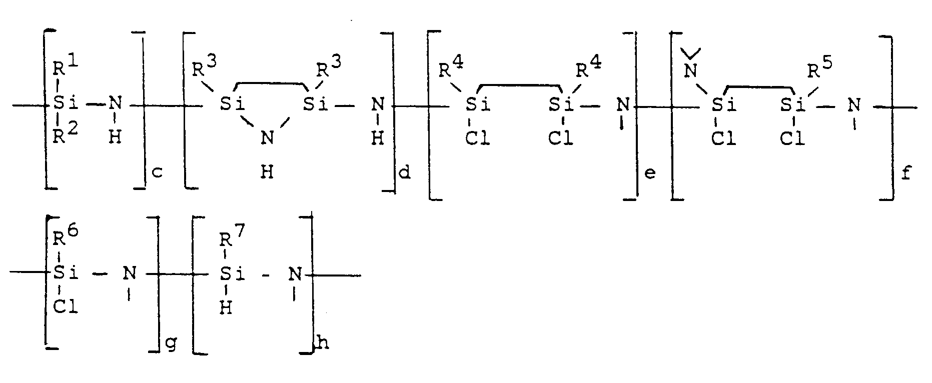
wobei die freien Valenzen der Stickstoffatome mit H-Atomen oder Silylresten R*SiXN〈(X=H,Cl,N〈, CH₂CH₂Si〈̶) abgesättigt sind und wobei c,d,e,f,g,h die Molfraktionen der jeweiligen Struktureinheiten bedeuten und unabhängig voneinander
R¹,R² = H, C₁-C₆-Alkyl oder C₂-C₆-Alkenyl
R⁴,R⁵,R⁶,R*= C₁-C₆-Alkyl oder C₂-C₆-Alkenyl
R⁷ = C₁-C₆-Alkyl oder C₂-C₆-Alkenyl ist.
Wobei die Molfraktionen c,d und mindestens eine der Molfraktionen e,f,g,h positive Werte annehmen
Diese neuen polymeren Chlorsilazane sind ein weiterer Gegenstand der vorliegenden Erfindung. Vorzugsweise ist dabei R¹, R² = H, C₁-C₃-Alkyl oder C₂-C₃-Alkenyl, und R³, R⁴, R⁵, R⁶, R⁷ = C₁-C₃-Alkyl oder C₂-C₃-Alkenyl. Besonders bevorzugt ist der Fall, daß R¹ = H, R²=R³=R⁴=R⁵=R⁷=CH₃ und R⁶ = CH₃ oder Vinyl ist.

Die polymeren Chlorsilazane haben eine netzartige Struktur. Ob die Molfraktionen c bis h positive Werte oder den Wert 0 annehmen, hängt von den bei der Umsetzung mit den Chlorsilanen eingesetzten Obligosilazanen der allgemeinen Formel (I) ab:
Wird (I) nur mit R⁶SiCl₃ umgesetzt, so ist e=f=h=0; c,d und g nehmen positive Werte an.

Wird (I) nur mit R⁷HSiCl₂ umgesetzt, so ist e=f=0; c,d,g und h nehmen positive Werte an, wobei R⁶=R⁷ ist.

Wird (I) nur mit Cl₂R⁴Si-CH₂CH₂-SiR⁴Cl₂ umgesetzt, so ist f=g=h=0; c,d und e nehmen positive Werte an.

Wird (I) mit einem Gemisch aus Cl₃Si-CH₂CH₂-SiR⁵Cl₂ und R⁶SiCl₃ umgesetzt, so ist e=h=0; c,d,f,g sind positiv.

Die jeweils vorliegenden Werte von c bis h können durch Integration der ¹H-NMR-Spektren und durch die Elementaranalyse ermittelt werden.

Im allgemeinen liegt c+d bei 0.3 bis 0.9, dabei ist c>0 und d>0; e,f,g,h liegen im allgemeinen bei 0.01 bis 0.4. Dabei ist c+d+e+f+g+h=1.

Bevorzugt sind solche polymeren Chlorsilazane, für die c und d bei 0,3 bis 0,8 liegen, insbesondere bei 0,3 bis 0,5. Die bevorzugten Werte für e, f, g, h liegen bei 0,01 bis 0,3, insbesondere bei 0,01 bis 0,2. Diese Werte lassen sich über die genannten Analysenmethoden kontrollieren. Die eben genannten bevorzugten Werte für c, d, e, f, g, h haben sich besonders bewährt, wenn als Endprodukt der Pyrolyse (nach Umwandlung der polymeren Chlorsilazane in Polysilazane) eine Faser hergestellt werden soll.

Die neuen polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem NH₃ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilazan in Lösung vorzulegen und gasförmigen Ammoniak einzuleiten oder flüssigen Ammoniak hinzuzufügen. Wurden die erfindungsgemäßen polymeren Chlorsilazane in einem geeigneten organischen Lösungsmittel hergestellt, so kann die Ammonolyse ohne vorherige Abtrennung des NH₄Cl in diesem Lösungsmittel durchgeführt werden. Die Ammonolyse wird vorzugsweise mit einem Überschuß NH₃ durchgeführt, um sich zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100°C gearbeitet, vorzugsweise bei -20 bis +30°C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33°C bei der Verwendung von flüssigem NH₃ zu arbeiten.

Nach beendeter Ammonolyse wird ggf. das überschüssige NH₃ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff- oder Argonatmosphäre bei Temperaturen von 800 bis 1200°C zu amorphen, dichten Materialien pyrolysiert werden, die im wesentlichen aus Si, N und C bestehen und in Spuren auch H und O enthalten können. Bei Pyrolysetemperaturen oberhalb 1200°C, etwa im Bereich von 1200°C bis 1400°C, entstehen teilamorphe, mikrokristalline keramische Werkstoffe, die als kristalline Phase α-Si₃N₄ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200°C bzw. 1200 bis 1400°C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in NH₃-Atmosphäre pyrolysieren. Dabei resultiert ein praktisch kohlenstofffreier, glasklarer, farbloser Werkstoff. Bei der Pyrolyse in NH₃ bei 1000°C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200°C) oder kristallinem Si₃N₄ (Pyrolyse oberhalb 1200°C), insbesondere oberhalb 1300°C). Die Pyrolyse in NH₃ läßt sich auf alle nach den oben beschriebenen Formgebungsverfahren hergestellten Formkörper, also aus Pulvern geformte Körper, Fasern, Beschichtungen anwenden.

Ein weiterer Gegenstand der Erfindung ist somit ein Verfahren zur Herstellung von Siliziumnitrid enthaltendem keramischem Material, dadurch gekennzeichnet, daß man die oben erwähnten, durch ihre Formel oder ihr Herstellungsverfahren charakterisierten polymeren Chlorsilazane mit Ammoniak bei -50 bis +100°C umsetzt und das dabei gebildete Polysilazan in inerter Stickstoff- oder Argonatmosphäre oder in Ammoniakatmosphäre bei 800 bis 1400°C pyrolysiert.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

Ein weiterer Gegenstand der vorliegenden Erfindung ist demgemäß ein Verfahren zur Herstellung von Siliziumnitrid enthaltendem keramischem Material, dadurch gekennzeichnet, daß man die oben erwähnten, durch ihre Formel oder ihr Herstellungsverfahren charakterisierten polymeren Chlorsilazane mit Ammoniak bei 0 bis +300°C umsetzt und das Reaktionsgemisch in NH₃-Atmosphäre bei 800 - 1400°C pyrolysiert.

### Beispiele

### Beispiel 1

Herstellung eines Polymeren der Formel (II) durch Reaktion eines Oligomeren der Formel (I) (a=0,67, b=0,33 und R¹=H, R²=R³=CH₃) mit CH₃SiCl₃.
**a. Herstellung des Oligomeren.**
In einem 2-l-Vierhalskolben mit Rührvorrichtung, Kühlung und Gaseinleitungsvorrichtung wurden in 1,5 l absolutem THF 60 ml (66,9 g, 0,58 mol) CH₃SiHCl₂ und 60 ml (72,0 g, 0,28 mol) Cl₂CH₃Si-CH₂CH₂-SiCH₃Cl₂ gelöst und vermischt. Dazu leitete man gasförmigen Ammoniak so ein, daß die Temperatur des Reaktionsgemisches zwischen 0 °C und 10 °C blieb. Sobald Sättigung erreicht war, d. h. alle SiCl-Gruppen durch NH-Gruppen substituiert waren, ließ man auftauen, um anschließend unter Schutzgas das bei der Reaktion entstandene Ammoniumchlorid abzutrennen. Das Filtrat wurde bei Unterdruck bis ca. 10 mbar und ca. 40 °C von THF und den anderen flüchtigen Bestandteilen befreit. Zurück blieb das lösungsmittelfreie Oligosilazan als klares, leicht bewegliches Öl (62,7 g).
**b. Herstellung des Polymeren.**
Das Oligosilazan wurde in 150 ml Toluol gelöst und vorsichtig mit 47 ml (59,8 g, 0,4 mol) CH₃SiCl₃ versetzt. Dabei stieg die Inntemperatur auf 52 °C an. Anschließend wurde 2 h zum Rückfluß erhitzt, wobei sich ein farbloser Niederschlag bildete. Danach wurde das Lösungsmittel bei Unterdruck in eine -78 °C kalte Kühlfalle destilliert, wobei die Temperatur des Ölbades jede 15 min um 10 °C erhöht und der Druck im Kolbeninneren etwas erniedrigt wurde, sodaß bei 220 °C schließlich 0,1 mbar erreicht waren. Dabei sublimierte ein Teil der Reaktionsmischung an die kälteren Teile des Gefäßes, und es blieb eine klare Schmelze zurück. Beim Abkühlen wurde diese zäher und schließlich fest, bei 20 °C war die resultierende Substanz glasartig spröde und klar durchscheinend.
Ausbeute: 45,6 g

| ¹H-NMR-Daten: | | | |
|---|---|---|---|
| SiCH₃+SiCH₂CH₂Si+NH | δ=0,0 - 2.0 ppm (br), | Intensität 20 | |
| SiH | δ=4,5 - 5,2 ppm (br), | Intensität 0,9 | |

| Analysendaten: | | | | | |
|---|---|---|---|---|---|
| gefunden: | Si 36,0 %, | N 16,0 %, | Cl 19,9 % , | O<0,3 % | |
| berechnet: | Si 37,2 %, | N 18,6 %, | Cl 17,1 %, | C 21,1 %, | H 4,8 % |

Das Polymer hatte die Formel (II) mit R¹ = H,
R²=R³=R⁶=CH₃: 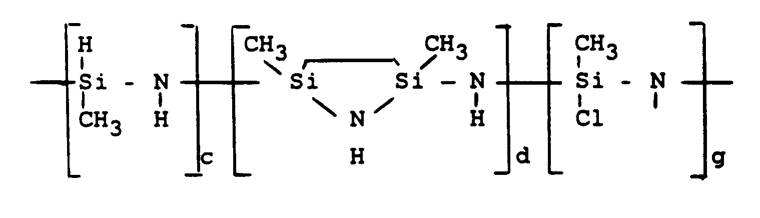 mit den Werten: c=0,38, d=0,19, g=0,43, e=f=h=0.

### Beispiel 2

Herstellung eines Polymeren der Formel (II) durch Reaktion eines Oligomeren der Formel (I)
(a=0,75, b=0,25 und R¹=H, R²=R³=CH₃) mit 1,2-Bis(dichlormethylsilyl)ethan Cl₂CH₃Si-CH₂CH₂-SiCH₃Cl₂. Es wurde analog Beispiel 1 gearbeitet.
**a. Herstellung des Oligosilazans**
Eingesetzte Chlorsilane:
86,3 g (0,75 mol, 77,4 ml) CH₃SiHCl₂
64,0 g (0,25 mol, 52,2 ml) Cl₂CH₃Si-CH₂CH₂-SiCH₃Cl₂
**b. Herstellung des Polysilazans**
Das Oligosilazan wurde mit 64 g (0,25 mol, 52 ml) Cl₂CH₃Si-CH₂CH₂-SiCH₃Cl₂ umgesetzt.
Ausbeute: 69,3 g

| ¹H-NMR-Daten: | | | |
|---|---|---|---|
| SiCH₃+SiCH₂CH₂Si+NH | δ=0,0 - 2,1 ppm (br), | Intensität 14,4 | |
| SiH | δ=4,5 - 5,1 ppm (br), | Intensität 0,9 | |

| Analysendaten: | | | | | |
|---|---|---|---|---|---|
| gefunden: | Si 35,3 %, | N 16,1 %, | Cl 17,1 % , | O<0,3 % | |
| berechnet: | Si 36,5 %, | N 15,2 %, | Cl 15,9 %, | C 25,5 %, | H 6,9 % |

Das Polymer hatte die Formel (II) mit R¹ = H,
R²=R³=R⁴=CH₃: 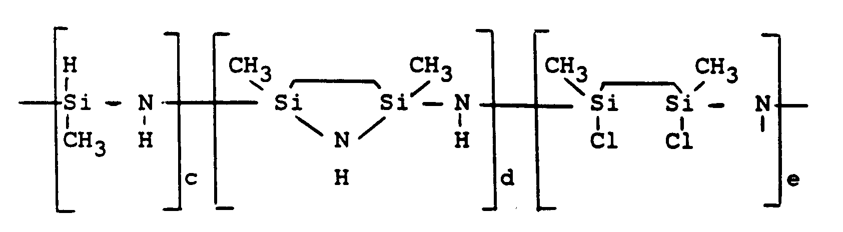 mit den Werten: c=0,54, d=0,21, e=0,25, f=g=h=0.

### Beispiel 3

Herstellung eines Polymeren der Formel (II) durch Reaktion eines Oligomeren der Formel (I)
(a=0,4, b=0,6 und R¹=H, R²=R³=CH₃) mit einem Gemisch aus Vinyltrichlorsilan und 1,2-Bis(dichlormethylsilyl)ethan. Es wurde analog Beispiel 1 gearbeitet.
**a. Herstellung des Oligosilazans**
Eingesetzte Chlorsilane:
46 g (0,4 mol, 41,3 ml) CH₃SiHCl₂
153,6 g (0,6 mol, 125,2 ml) Cl₂CH₃Si-CH₂CH₂-SiCH₃Cl₂
**b. Herstellung des Polysilazans**
Das Oligosilazan wurde mit einem Gemisch aus 51,2 g (0,2 mol, 41,7 ml) Cl₂CH₃Si-CH₂CH₂-SiCH₃Cl₂ und 16,3 g (0,1 mol, 12,8 ml) Vinyl-SiCl₃ umgesetzt.
Ausbeute: 93,5 g

| ¹H-NMR-Daten: | | | |
|---|---|---|---|
| SiCH₃+SiCH₂CH₂Si+NH | δ=0,0 - 2,1 ppm (br), | Intensität 17,6 | |
| SiH | δ=4,5 - 4,9 ppm (br), | Intensität 0,3 | |
| Si Vinyl | δ=5,7 - 6,2 ppm (br), | Intensität 0,5 | |

| Analysendaten: | | | | | |
|---|---|---|---|---|---|
| gefunden: | Si 35,1 %, | N 18,4 %, | Cl 10,7 % , | O<0,3 % | |
| berechnet: | Si 36,8 %, | N 17,4 %, | Cl 9,4 %, | C 30,1 %, | H 7,3 % |

Das Polymer hatte die Formel (II) mit R¹ = H,
R²=R³=R⁴=CH₃, R⁶=Vinyl: 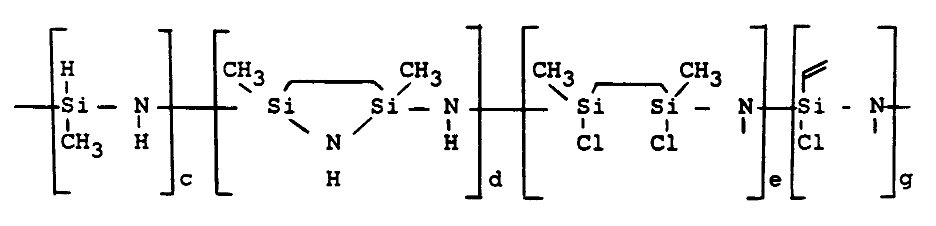 mit den Werten: c=0,22, d=0,56, e=0,12, g=0,1, f=h=0.

### Beispiel 4

4. Herstellung eines Polymeren der Formel (II) durch Reaktion eines Oligomeren der Formel (I)
   (a=0,5, b=0,5 und R¹=R²=R³=CH₃) mit einem Gemisch aus Ethyltrichlorsilan und 1-Trichlorsilyl-2-dichlormethylsilyl-ethan.
   Es wurde analog Beispiel 1 gearbeitet.

**a. Herstellung des Oligosilazans**
Eingesetzte Chlorsilane:
51,6 g (0,4 mol, 48,5 ml) (CH₃)₂SiCl₂
102,4 g (0,4 mol, 83,5 ml) Cl₂CH₃Si-CH₂CH₂-SiCH₃Cl₂
**b. Herstellung des Polysilazans**
Das Oligosilazan wurde mit einem Gemisch aus 41,5 g (0,15 mol, 34,6 mol) Cl₃Si-CH₂CH₂-SiCH₃Cl₂ und 40,9 g (0,25 mol, 39,9 ml) C₂H₅SiCl₃ umgesetzt.
Ausbeute: 69,2 g

| ¹H-NMR-Daten: | |
|---|---|
| SiCH₃+SiCH₂CH₂Si+ SiC₂H₅+NH | δ=0,0 - 2,4 ppm (br) |

| Analysendaten: | | | | | |
|---|---|---|---|---|---|
| gefunden: | Si 33,1 %, | N 17,4 %, | Cl 14,1 % , | O<0,3 % | |
| berechnet: | Si 34,6 %, | N 15,8 %, | Cl 13,6 %, | C 28,4 %, | H 6,9 % |

Das Polymer hatte die Formel (II) mit R¹=R²=R³=R⁵=CH₃,
R⁶=C₂H₅: 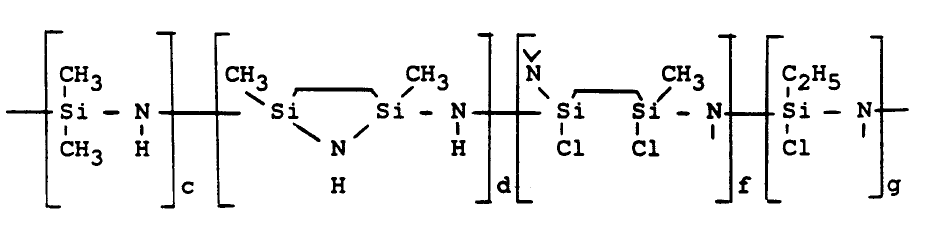 mit den Werten: c=0,27, d=0,39, f=0,13, g=0,43, e=h=0.

## Patentansprüche

1. Verfahren zur Herstellung von chlorhaltigen Silazanpolymeren, dadurch gekennzeichnet, daß man Oligosilazane der Formel (I) 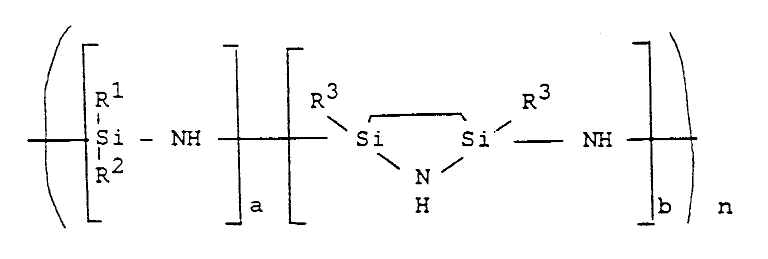 worin a und b Molfraktionen sind und n die Zahl sich wiederholender Einheiten im Molekül ist und a > 0, b > 0 und n 2 bis 12 ist, mit mindestens einem der Chlorsilane Cl₂R⁴Si-CH₂-CH₂-SiR⁴Cl₂, Cl₃Si-CH₂-CH₂-SiR⁵Cl₂, R⁶SiCl₃ oder R⁷SiHCl₂ bei 30 °C bis 300 °C umsetzt, wobei unabhängig voneinander
R¹, R² = H, C₁-C₆-Alkyl oder C₂-C₆-Alkenyl,
R³, R⁴, R⁵, R⁶, R⁷ = C₁-C₆-Alkyl oder C₂-C₆-Alkenyl ist.

2. Verfahren zur Herstellung von chlorhaltigen Silazanpolymeren, dadurch gekennzeichnet, daß man Oligosilazane, die durch Reaktion von überschüssigem Ammoniak mit einem Gemisch aus R¹R²SiCl₂ und Cl₂R³Si-CH₂CH₂-SiR³Cl₂ bei -70 °C bis +100 °C erhalten worden sind, mit mindestens einem der Chlorsilane Cl₂R⁴Si-CH₂CH₂-SiR⁴Cl₂, Cl₃Si-CH₂CH₂-SiR⁵Cl₂, R⁶SiCl₃ oder R⁷SiHCl₂ bei 30 °C bis 300 °C umsetzt, wobei unabhängig voneinander
R¹, R² = H, C₁-C₆-Alkyl oder C₂-C₆-Alkenyl
R³, R⁴, R⁵, R⁶, R⁷ = C₁-C₆-Alkyl oder C₂-C₆-Alkenyl
ist.

3. Verfahren nach einem der Ansprüche 1 bis 2, dadurch gekennzeichnet, daß unabhängig voneinander
R¹, R² = H, C₁-C₃-Alkyl oder C₂-C₃-Alkenyl,
R³, R⁴, R⁵, R⁶, R⁷ = C₁-C₃-Alkyl oder C₂-C₃-Alkenyl
ist.

4. Verfahren nach einem der Ansprüche 1 bis 2, dadurch gekennzeichnet, daß
R¹ = H
R², R³, R⁴, R⁵, R⁷ = CH₃
R⁶ = CH₃ oder Vinyl ist.

5. Verfahren nach einem der Ansprüche 1 bis 4, dadurch gekennzeichnet, daß das molare Verhältnis der Chlorsilane zur Monomereinheit des Oligosilazans 0.1:1 bis 1,5:1 beträgt.

6. Verfahren nach einem der Ansprüche 1 bis 5, dadurch gekennzeichnet, daß man beim Zusammengeben der Reaktanten eine Temperatur von 30 °C bis 50 °C einhält und anschließend auf 100 °C bis 300 °C erhitzt.

7. Chlorhaltige Silazanpolymere der Formel (II) 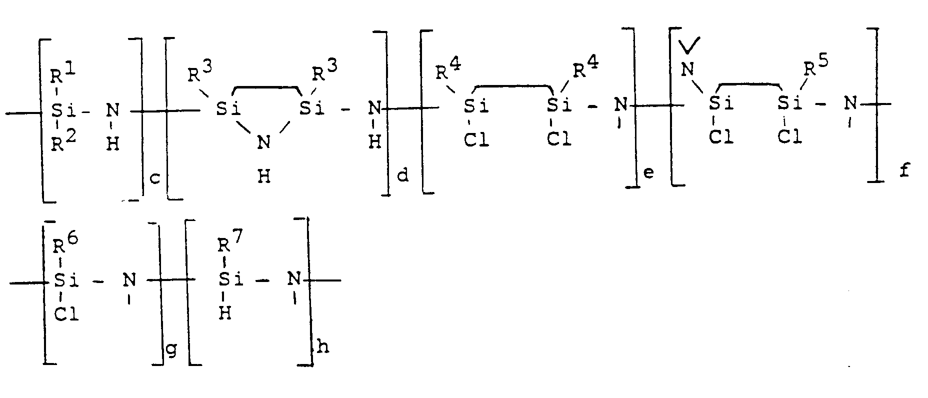 wobei die freien Valenzen der Stickstoffatome mit H-Atomen oder Silylresten R*SiXN〈(X=H,Cl,N〈, CH₂CH₂Si〈̶) abgesättigt sind und wobei c,d,e,f,g,h die Molfraktionen der jeweiligen Struktureinheiten bedeuten und unabhängig voneinander
R¹,R² = H, C₁-C₆-Alkyl oder C₂-C₆-Alkenyl
R⁴,R⁵,R⁶,R*= C₁-C₆-Alkyl oder C₂-C₆-Alkenyl
R⁷ = C₁-C₆-Alkyl oder C₂-C₆-Alkenyl ist wobei die Molfraktionen c,d und mindestens eine der Molfraktionen e,f,g,h positive Werte annehmen.

8. Chlorhaltige Silazanpolymere nach Anspruch 7, dadurch gekennzeichnet, daß unabhängig voneinander
R¹, R² = H, C₁-C₃-Alkyl oder C₂-C₃-Alkenyl,
R³, R⁴, R⁵, R⁶, R⁷ = C₁-C₃-Alkyl oder C₂-C₃-Alkenyl
ist.

9. Chlorhaltige Silazanpolymere nach Anspruch 7, dadurch gekennzeichnet, daß
R¹ = H
R² = R³ = R⁴ = R⁵ = R⁷ = R* = CH₃
R⁶ = CH₃ oder Vinyl ist.

10. Verfahren zur Herstellung von Siliziumnitrid enthaltendem keramischem Material, dadurch gekennzeichnet, daß man chlorhaltige Silazanpolymere gemäß einem der Ansprüche 7 bis 9 mit Ammoniak bei -50 bis +100 °C umsetzt und das dabei gebildete Polysilazan in inerter Stickstoff-oder Argonatmosphäre oder in Ammoniakatmosphäre bei 800 bis 1400 °C pyrolysiert.

11. Verfahren zur Herstellung von Siliziumnitrid enthaltendem keramischem Material, dadurch gekennzeichnet, daß man chlorhaltige Silazanpolymere gemäß einem der Ansprüche 7 bis 9 mit Ammoniak bei 0 bis 300 °C umsetzt und das Reaktionsgemisch in NH₃-Atmosphäre bei 800 - 1400 °C pyrolysiert.

## Claims

1. A process for the preparation of chlorine-containing silazane polymers, which comprises reacting oligosilazanes of the formula (I) 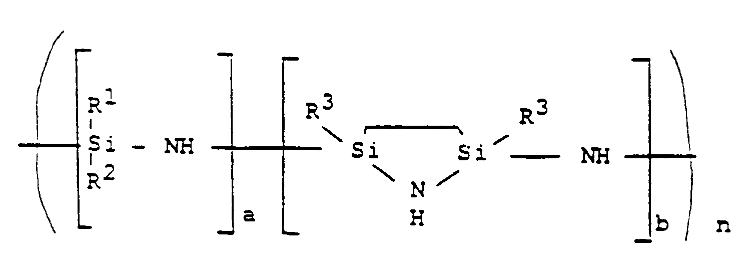 in which a and b are mole fractions and n is the number of repeating units in the molecule and in which a > 0, b > 0 and n is 2 to 12, with at least one of the chlorosilanes
Cl₂R⁴Si-CH₂-CH₂-SiR⁴Cl₂, Cl₃Si-CH₂-CH₂-SiR⁵Cl₂, R⁶SiCl₃ or R⁷SiHCl₂ at 30°C to 300°C, where, independently of one another,
R¹ and R² = H, C₁-C₆-alkyl or C₂-C₆-alkenyl and
R³, R⁴, R⁵, R⁶ and R⁷ = C₁-C₆-alkyl or C₂-C₆-alkenyl.

2. A process for the preparation of chlorine-containing silazane polymers, which comprises reacting oligosilazanes, which have been obtained by reaction of an excess of ammonia with a mixture of R¹R²SiCl₂ and Cl₂R³-Si-CH₂CH₂-SiR³Cl₂ at -70°C to +100°C, with at least one of the chlorosilanes Cl₂R⁴Si-CH₂CH₂-SiR⁴Cl₂, Cl₃Si-CH₂CH₂-SiR⁵Cl₂, R⁶SiCl₃ or R⁷SiHCl₂ at 30°C to 300°C, where, independently of one another,
R¹ and R² = H, C₁-C₆-alkyl or C₂-C₆-alkenyl and
R³, R⁴, R⁵, R⁶ and R⁷ = C₁-C₆-alkyl or C₂-C₆-alkenyl.

3. The process as claimed in either of claims 1 and 2, wherein, independently of one another,
R¹ and R² = H, C₁-C₃-alkyl or C₂-C₃-alkenyl and
R³, R⁴, R⁵, R⁶ and R⁷ = C₁-C₃-alkyl or C₂-C₃-alkenyl.

4. The process as claimed in either of claims 1 and 2, wherein
R¹ = H
R², R³, R⁴, R⁵ and R⁷ = CH₃ and
R⁶ = CH₃ or vinyl.

5. The process as claimed in one of claims 1 to 4, wherein the molar ratio of the chlorosilanes to the monomer unit of the oligosilazane is 0.1:1 to 1.5:1.

6. The process as claimed in one of claims 1 to 5, wherein a temperature of 30°C to 50°C is maintained when adding the reactants together and the mixture is subsequently heated to 100°C to 300°C.

7. Chlorine-containing silazane polymers of the formula (II) 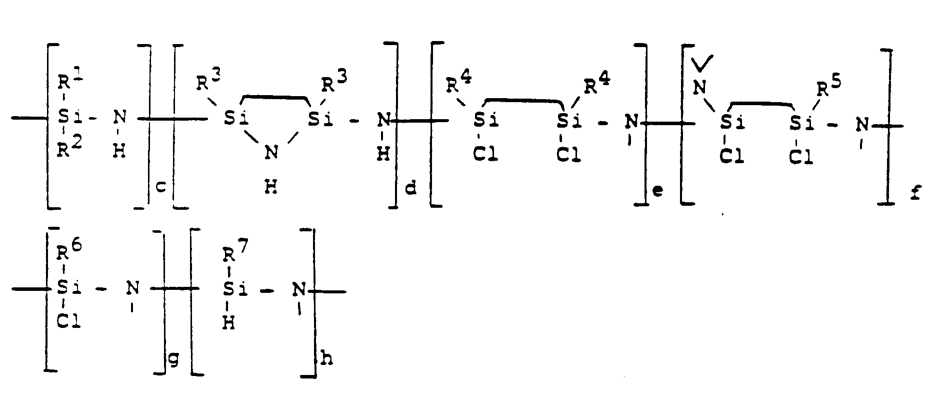 in which the free valencies of the nitrogen atoms are saturated by H atoms or silyl radicals R*SiXN〈(X=H,Cl,N〈, CH₂CH₂Si〈̶) and in which c, d, e, f, g and h denote the mole fractions of the individual structural units and, independently of one another,
R¹ and R² = H, C₁-C₆-alkyl or C₂-C₆-alkenyl
R⁴, R⁵, R⁶ and R* = C₁-C₆-alkyl or C₂-C₆-alkenyl and
R⁷ = C₁-C₆-alkyl or C₂-C₆-alkenyl, the mole fractions c and d and at least one of the mole fractions e, f, g and h taking on positive values.

8. Chlorine-containing silazane polymers as claimed in claim 7, wherein, independently of one another,
R¹ and R² = H, C₁-C₃-alkyl or C₂-C₃-alkenyl and
R³, R⁴, R⁵, R⁶ and R⁷ = C₁-C₃-alkyl or C₂-C₃-alkenyl.

9. Chlorine-containing silazane polymers as claimed in claim 7, wherein
R¹ = H
R² = R³ = R⁴ = R⁵ = R⁷ = R* = CH₃ and
R⁶ = CH₃ or vinyl.

10. A process for the preparation of ceramic material containing silicon nitride, which comprises reacting chlorine-containing silazane polymers as claimed in one of claims 7 to 9 with ammonia at -50 to +100°C and pyrolysing the polysilazane thus formed in an inert atmosphere of nitrogen or argon or in an atmosphere of ammonia at 800 to 1400°C.

11. A process for the preparation of ceramic material containing silicon nitride, which comprises reacting chlorine-containing silazane polymers as claimed in one of claims 7 to 9 with ammonia at 0 to 300°C and pyrolysing the reaction mixture in an atmosphere of NH₃ at 800 - 1400°C.

## Revendications

1. Procédé pour préparer des polymères de silazanes chlorés, caractérisé en ce qu'on fait réagir des oligosilazanes de formule (I) 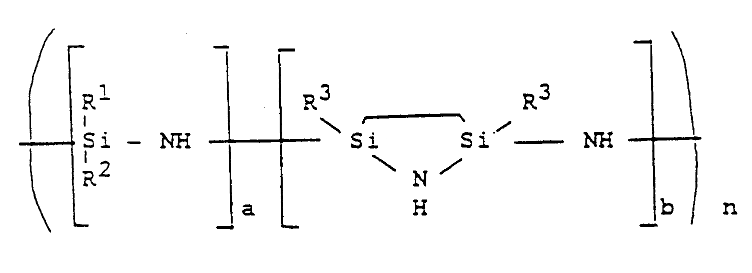 où a et b sont des fractions molaires, et n est le nombre des motifs répétitifs dans la molécule, avec a > 0, b > 0 et n = 2 à 12, avec au moins l'un des chlorosilanes Cl₂R⁴Si-CH₂-CH₂-SiR⁴Cl₂, Cl₃Si-CH₂-CH₂-SiR⁵Cl₂, R⁶SiCl₃ ou R⁷SiHCl₂, à une température de 30 à 300°C, où, indépendamment les uns des autres, R¹ et R² sont chacun H ou un radical alkyle C₁-C₆ ou alcényle en C₂-C₆, les radicaux R³, R⁴, R⁵, R⁶ et R⁷ sont chacun des radicaux alkyle en C₁-C₆ ou alcényle en C₂-C₆.

2. Procédé pour préparer des polymères de silazanes chlorés, caractérisé en ce qu'on fait réagir des oligosilazanes, qui ont été obtenus par la réaction d'ammoniac en excès avec un mélange de R¹R²SiC₂ et de Cl₂R³Si-CH₂-CH₂-SiR³Cl₂ à une température de -70 à +100°C, avec au moins l'un des chlorosilanes Cl₂R⁴Si-CH₂-CH₂-SiR⁴Cl₂, Cl₃Si-CH₂-CH₂-SiR⁵Cl₂, R⁶SiCl₃, ou R⁷SiHCl₂, à une température de 30 à 300°C, où, indépendamment les uns des autres, R¹ et R² sont chacun H ou un radical alkyle en C₁-C₆ ou alcényle en C₂-C₆, R³, R⁴, R⁵, R⁶, R⁷ sont chacun un radical alkyle en C₁-C₆ ou alcényle en C₂-C₆.

3. Procédé selon l'une des revendications 1 à 2, caractérisé en ce que, indépendamment les uns des autres, R¹ et R² sont chacun H ou un radical alkyle en C₁-C₃ ou alcényle en C₂-C₃, R³, R⁴, R⁵, R⁶ et R⁷ sont chacun un radical alkyle en C₁-C₃ ou alcényle en C₂-C₃.

4. Procédé selon l'une des revendications 1 ou 2, caractérisé en ce que R¹ est H, R², R³, R⁴, R⁵, R⁷ sont chacun CH₃, et R⁶ est CH₃ ou le radical vinyle.

5. Procédé selon l'une des revendications 1 à 4, caractérisé en ce que la proportion molaire des chlorosilanes au motif monomère de l'oligosilazane est de 0,1:1 à 1,5:1.

6. Procédé selon l'une des revendications 1 ou 5, caractérisé en ce que, lors de la réunion des réactifs, on maintient la température à une valeur de 30 à 50°C, puis on chauffe à une température de 100 à 300°C.

7. Polymères de silazanes chlorés de formule (II) 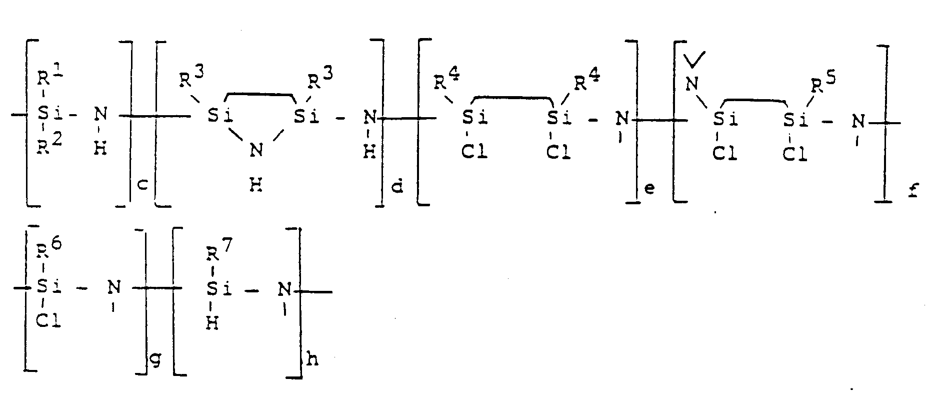 où les valences libres des atomes d'azote sont saturés par des atomes d'hydrogène ou des résidus silyles R*SiXN〈 (X = H, Cl, N〈, CH₂CH₂Si〈̶), et où c, d, e, f, g et h représentent les fractions molaires des différents motifs structuraux et, indépendamment les uns des autres, R¹ et R² sont chacun H ou un radical alkyle en C₁-C₆ ou alcényleen C₂-C₆ ; R⁴, R⁵, R⁶ et R* sont chacun un radical alkyle en C₁-C₆ ou alcényle en C₂-C₆ ; et R⁷ est un radical alkyle en C₁-C₆ ou alcényle en C₂-C₆, les fractions molaires c et d et au moins l'une des fractions molaires e, f, g et h ayant des valeurs positives.

8. Polymères de silazanes chlorés selon la revendication 7, caractérisés en ce que, indépendamment les uns des autres, R¹ et R² sont chacun H ou un radical alkyle en C₁-C₃ ou alcényle en C₂-C₃, R³, R⁴, R⁵, R⁶ et R⁷ sont chacun un radical alkyle en C₁-C₃ ou alcényle en C₂-C₃.

9. Polymères de silazanes chlores selon la revendication 7, caractérisés en ce que R¹ = H, R² = R³ = R⁴ = R⁵ = R⁷ = R* = CH₃, et R⁶ est CH₃ ou le radical vinyle.

10. Procédé pour préparer un matériau céramique contenant du nitrure de silicium, caractérisé en ce qu'on fait réagir des polymères de silazanes chlorés selon des revendications 7 à 9, avec de l'ammoniac à une température de -50 à +100°C, le polysilazane ainsi formé étant pyrolysé à une température de 800 à 1400°C dans une atmosphère inerte d'azote ou d'argon ou dans une atmosphère d'ammoniac.

11. Procédé pour fabriquer un matériau céramique contenant du nitrure de silicium, caractérisé en ce qu'on fait réagir des polymères de silazanes chlorés selon l'une des revendications 7 à 9, avec de l'ammoniac à une température de 0 à 300°C, le mélange réactionnel étant pyrolysé à une température de 800 à 1400°C dans une atmosphère de NH₃.
